# EUROPEAN PATENT APPLICATION

(11) **EP 4 588 953 A1**
(43) Date of publication of application: **23.07.2025**
(21) Application number: 24152285.3
(22) Date of filing: 17.01.2024
(51) Int. Cl.: C08G 59/50, C08L 63/00

(54) **METHOD OF PRODUCING A WIND TURBINE BLADE, A RESPECTIVELY PRODUCED WIND TURBINE BLADE AND A RESIN COMPOSITION SUITABLE FOR USE IN THE PRODUCTION**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A resin composition suitable for use in the production of a wind turbine blade or a part of any of the foregoing by means of a vacuum infusion method is described. The resin composition comprises an epoxy component, a sterically hindered amine component, and a polyfunctional (meth)acrylate component. Moreover, a method of producing a wind turbine blade, a nacelle or a part of any of the foregoing and a respectively produced wind turbine blade, a nacelle or a part of any of the foregoing as well as a method of recycling a wind turbine blade, a nacelle or a part of any of the foregoing are described.

## Description

### Field of invention

The present invention relates to the field of wind turbine blades, in particular to a resin composition suitable for use in a method of producing a wind turbine blade or a nacelle by means of a vacuum infusion method, and a method of producing a wind turbine blade, a nacelle or a part of any of the foregoing.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades. The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

Various parts of a wind turbine, such as wind turbine blades or nacelles, are typically made of a composite material of (glass) fiber reinforced polymer resin. A conventionally used method for producing such composite material includes vacuum assisted resin transfer molding (VARTM), wherein a liquid or flowable resin is injected in a mold under application of vacuum. To this end, low viscosity resins are generally used which reduce cycle time of manufacture of parts. Moreover, recycling and reprocessing of composites becomes a more and more important topic.

Epoxy amine resins are typically used in industry as the resin starting material. The chemistry thereof is versatile for the application in wind blades and components because the mechanical properties are outstanding and the physical properties can be tuned to fit the vacuum infusion process, which requires low viscosity and long pot life, ideally still combined with fast curing. A drawback of epoxy amine resins is the reaction enthalpy and the way it is released. This can result in very high temperature in thick parts and insulated areas.

Although epoxy amine based resins offer several advantages, there are challenges in the manipulation of cured structures, the post treatment, maintenance and end of life.

For example, if there are geometrical deviations, they must be accepted, defects like dry areas or cracks must be removed and rebuilt with dedicated resins for post treatment. The same is the case for damages during operation. The end of life treatment is also difficult. There are few recycling technologies available, but those are not well suited for recycling of glass reinforced composite structures because the cost of the recycling process cost is exceeding the value of the recovered materials.

As a first step acetal or ketal containing resins have been introduced, which can be recycled under mild acidic conditions. In literature it was described, that acetals and ketals can exhibit dynamic behavior, but the very densely crosslinked infusion resins used for the recyclable blade only show very minimal weldability and generally almost no dynamic behavior.

Moreover, a combination of a small amount of acrylates in an epoxy-amine resin has been described by Dow (WO 2012/148815 A1). The patent application describes the use of few percent (up to 4 %) acrylate in the epoxy part. This reference describes that the reaction product (a secondary amine of a primary amine and an acrylate) is able to further react with an epoxy group forming a tertiary amine. However, such an epoxy acrylate amine resin has still drawbacks, in particular in terms of pot life and network density, impeding its application for use in the production of composite material of fiber reinforced polymer resin for wind turbine blades or other parts of a wind turbine.

Thus, there may be a need for further improvements in epoxy amine based resins for use in the production of composite material of fiber reinforced polymer resin for wind turbine blades or other parts of a wind turbine, in particular in terms of manageability (such as a sufficient long pot life), reprocessability and/or recyclability.

### Summary of the Invention

This need may be met by the subject matter according to the independent claims. Advantageous embodiments of the present invention are described by the dependent claims.

According to an aspect of the invention, there is provided a resin composition (suitable for use in the production of a wind turbine blade, a nacelle or a part thereof by means of a vacuum infusion method) comprising an epoxy component, a sterically hindered amine component, and a polyfunctional (meth)acrylate component (comprising two or more (meth)acrylate functional groups).

According to a further aspect of the invention, there is provided a method of producing a wind turbine blade, a nacelle or a part of any of the foregoing, the method comprising applying a resin composition as described herein into a mold by a vacuum infusion method, in particular vacuum assisted resin transfer molding, and curing the resin composition.

According to a further aspect of the invention, there is provided a wind turbine blade, a nacelle or a part of any of the foregoing obtainable (or obtained) by a method as described herein.

According to a further aspect of the invention, there is provided a method of recycling a wind turbine blade, a nacelle or a part of any of the foregoing as described herein, wherein the method comprises bringing an acidic aqueous liquid (having a pH of less than 7) comprising an acid in contact with a portion of a surface of the wind turbine blade, the nacelle or a part of any of the foregoing.

These aspects of the invention are in particular based on the finding that if the epoxy acrylate amine resin contains a sterically hindered amine component in excess, this component reacts only once with either an acrylate or an epoxy component (because each amine group reacts only once so that the formed secondary amine does not react further). As a result, a polymer network is obtained having a lower network density compared to (sterically unhindered) amines that react twice. Also the reactivity is reduced and the system offers longer pot life.

It was also surprisingly found that sterically hindered amines that react only once offer reprocessability already at much lower acrylate levels compared to (sterically unhindered) amines that react twice.

The use of sterically hindered amines in combination with acrylates and epoxies solves a problem of the acrylate-amine reaction. The reactivity is reduced, so significantly longer pot life can be achieved. Additionally, also the dynamic behavior is achieved with lower acrylate concentrations compared to other amines.

As a special feature, the resulting polymer disintegrates (breaks apart) readily in aqueous acetic acid, even at room temperature. This is an interesting feature because this offers the possibility of recycling the polymer portion of a fiber reinforced polymer resin composite material under mild conditions. This is an advantage for the industrialization of the recycling process because a broader variety of resins are compatible with it.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a resin composition may be combined with any other exemplary embodiment of a resin composition and with any exemplary embodiment of a method of producing a wind turbine blade, a nacelle or a part of any of the foregoing and with any exemplary embodiment of a wind turbine blade, a nacelle or a part of any of the foregoing, a method of recycling a wind turbine blade, a nacelle or a part of any of the foregoing and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a resin composition is provided. The resin composition may in particular be suitable for use in a vacuum infusion method and may therefore also be referred to as an infusion resin. Moreover, the resin composition may in particular be suitable for use in the production of a wind turbine blade, a nacelle or a part of any of the foregoing or any other part of a wind turbine comprising a composite material of (glass) fiber reinforced polymer resin.

The term "composition", as used herein, may in particular mean that the components (ingredients) of the composition are in close proximity with each other and/or that the components are (intensely) mixed with each other, for instance by using a mixer, a stirrer and/or by shaking, to thereby form the composition. In particular, the components of the compositions may be uniformly distributed or dispersed throughout within the composition. The composition may be in particular semi-solid (pasty) or liquid, in particular a liquid solution or a semi-solid or liquid suspension.

The term "resin composition", as used herein, may in particular mean that the composition comprises or (substantially) consists of resins or resin components which may undergo a chemical reaction (e.g. polymerization or crosslinking reaction) with some of each other, thereby curing or hardening, typically induced by thermal energy (e.g. heating) or irradiation with electromagnetic radiation.

The resin composition comprises an epoxy component. The epoxy component is not particularly limited and any suitable example thereof customary in the field of epoxy-amine infusion resins may be used. The epoxy component is in particular characterized in that it comprises one or more epoxide functional groups.

In an embodiment, the epoxy component is selected from the group consisting of glycidyl ethers, glycidyl esters, glycidyl amines, divinylbenzene dioxide, cycloaliphatic epoxides, and combinations thereof.

The resin composition also comprises an amine component. The amine component is characterized in that it is a sterically hindered amine component. In other words, the amine functional group is sterically hindered or partially shielded so that its accessibility (for instance of potential reactant) is reduced or limited. Therefore, the reactivity of a sterically hindered amine is generally reduced compared to a sterically unhindered amine. In particular, the present inventors have found that a sterically hindered amine component may only react once with either a (meth)acrylate component or an epoxy component, rather than with both as in case of a sterically unhindered amine component. As a result, a polymer network may be obtained having a lower network density compared to (sterically unhindered) amines that react twice.

In an embodiment, the sterically hindered amine component comprises at least one functional group selected from H₂N-C(CH₃)₂- (i.e. with two methyl groups at the carbon atom to which the amino group is bound), H₂N-C(CH(CH₃)₂)₂- (i.e. with two isopropyl groups at the carbon atom to which the amino group is bound), H₂N-C(C(CH₃)₃)₂- (i.e. with two tert-butyl groups at the carbon atom to which the amino group is bound) and an amino group bound to a cyclic carbon atom (i.e. that forms part of a cycloaliphatic ring, like in 1,8-diamino-p-menthane). The sterically hindered amine component may also comprise at least one functional group wherein the amino group is bound to a carbon atoms to which a combination of at least two of a methyl group, an isopropyl group and a cyclic carbon atom is bound. As will be appreciated by those skilled in the art, the steric hindrance of the amino group increases with increasing bulkiness of the adjacent groups, i.e. a H₂N-C(C(CH₃)₃)₂- functional group provides for a more sterically hindered amine component than a H₂N-C(CH₃)₂- functional group. The sterically hindered amine component may also contain combinations of the functional groups H₂N-C(CH₃)₂-, H₂N-C(CH(CH₃)₂)₂- and/or H₂N-C(C(CH₃)₃)₂- in one molecule as well as in separate components.

In an embodiment, the sterically hindered amine component comprises at least one H₂N-C(CH₃)₂- functional group. It has turned out that a structure with two methyl groups at the carbon atom to which the amino group is bound may already provide for sufficient sterical hindrance of the amino group to achieve appropriate effects. The sterically hindered amine component may comprise one, two or three H₂N-C(CH₃)₂-functional groups, in particular, two H₂N-C(CH₃)₂- functional groups.

In an embodiment, the sterically hindered amine component is selected from the group consisting of aliphatic polyamines, arylaliphatic polyamines, cycloaliphatic polyamines, alkanolamines, polyetherpolyamines, and combinations thereof, wherein each component comprises at least one sterically hindered amine functional group.

The resin composition also comprises a polyfunctional (meth)acrylate component. The polyfunctional (meth)acrylate component is in particular characterized in that it comprises two or more (meth)acrylate functional groups. A polyfunctional acrylate component, i.e. comprising two or more acrylate functional groups, is preferred, but a polyfunctional methacrylate component, i.e. comprising two or more methacrylate functional groups, may also be used. It may also be possible to use a mixed polyfunctional (meth)acrylate component comprising one or more acrylate functional groups and one or more methacrylate functional groups.

A "(meth)acrylate" encompasses an acrylate and/or a methacrylate. The terms "acrylate" and "methacrylate" as used herein, correspond to the generally accepted meanings thereof. An acrylate may be represented by the general formula "H₂C=CH-C(=O)-" and a methacrylate may be represented by the general formula "H₂C=C(CH₃)-C(=O)-". An acrylate may also encompass an itaconate.

In an embodiment, the polyfunctional (meth)acrylate component comprises two, three, four or more (meth)acrylate functional groups.

In an embodiment, the polyfunctional (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol A diglycidlyether, trimethylolpropane triacrylate, pentaerythritol tetraacrylate, tricyclo[5.2.1.0(2,6)]decanedimethanol diacrylate and combinations thereof.

In an embodiment, the epoxy component comprises Bisphenol A diglycidyl ether and/or the sterically hindered amine component comprises 1,8-diamino-p-menthane and/or the polyfunctional (meth)acrylate component comprises trimethylolpropane triacrylate or pentaerythritol tetraacrylate. In other words, the epoxy component may in particular comprise Bisphenol A diglycidyl ether. The sterically hindered amine component may in particular comprise 1,8-diamino-p-menthane. The polyfunctional (meth)acrylate component may in particular comprise trimethylolpropane triacrylate or pentaerythritol tetraacrylate. It may be advantageous if two or three of these preferred compounds are used because they have proven to be particularly suitable for achieving the desired effects and properties.

In an embodiment, a molar ratio of the polyfunctional (meth)acrylate component is in a range of from 10 to 50 mol% and a molar ratio of the epoxy component is in a range of from 50 to 90 mol%, each per 100 mol% of the sterically hindered amine component. In other words, per 100 mol% of the sterically hindered amine component, the resin composition may comprise 50 to 90 mol% of the epoxy component and 10 to 50 mol% of the polyfunctional (meth)acrylate component. The sum of the epoxy component and the polyfunctional (meth)acrylate component may in particular amount to 100 mol%. It might also be possible that the sterically hindered amine component is contained in excess compared to the sum of the epoxy component and the polyfunctional(meth)acrylate component. For instance the composition may also comprise 100 to 200 mol% of the sterically hindered amine component, 50 to 90 mol% of the epoxy component and 10 to 50 mol% of the polyfunctional (meth)acrylate component.

In an embodiment, a molar ratio of the polyfunctional (meth)acrylate component to the epoxy component is in a range of from 1:9 to 1:1, in particular in a range of from 1:5 to 1:2.

In an embodiment, the resin composition further comprises an amine hardener. In particular, the amine hardener may be an amine component not comprising a sterically hindered amine functional group, i.e. a conventional amine hardener in the field of epoxy-amine infusion resins, such as isophorone diamine (IPDA) or a polyetheramine like Jeffamine D-230. Due to the partial replacement of the epoxy component with the polyfunctional (meth)acrylate component, in particular in cases of higher amounts of the polyfunctional (meth)acrylate component, such conventional amine hardeners may replace a part of the sterically hindered amine component, which provides the effect of an increase in reactivity of the resin composition and an increase in network density of the resulting polymer. Since these increases are desired only in some cases and only to some extent, the content of the amine hardener should typically be limited, for instance to an amount of from 1 to 20 parts by weight, in particular 5 to 15 parts by weight, per 100 parts by weight of the sterically hindered amine component. However, as will be appreciated by those skilled in the art, the reactivity of the resin composition and the network density of the resulting polymer may be properly adjusted as desired by the addition of only relatively small amounts of a conventional amine hardener.

The resin composition according to the first aspect may be advantageously used in a method according to the second aspect as described below.

In a second aspect, a method of producing a wind turbine blade, a nacelle or a part of any of the foregoing is provided.

In the method, a resin composition as described herein is applied, in particular injected, into a mold by a vacuum infusion method. In the context of the present specification, the term "vacuum infusion method" may in particular denote a molding technique wherein a liquid or flowable resin is injected in a mold under application of vacuum. In particular, vacuum assisted resin transfer molding (VARTM) may be used. The infusion resin may in particular be a liquid or flowable composition comprising components, typically at least two different types of components, that may react with each other to thereby form a cured or hardened product.

The mold, into which the resin composition is applied, typically forms a cavity and may therefore also be designated as mold cavity. The mold may be adapted to an outline of the turbine blade, the nacelle or a part of any of the foregoing to be produced.

In an embodiment, the step of curing the resin composition comprises heating the resin composition to a temperature in the range of from 60 to 150 °C, in particular 70 to 120 °C.

In an embodiment, the method further comprises, after curing the resin composition, removing the mold to thereby obtain the produced wind turbine blade, nacelle or the part thereof.

In a further aspect, a wind turbine blade, a nacelle or a part of any of the foregoing is obtainable or is obtained by a method as described in the foregoing.

In a further aspect, a method of recycling a wind turbine blade, a nacelle or a part of any of the foregoing as described herein, wherein the method comprises bringing an acidic aqueous liquid comprising an acid in contact with a portion of a surface of the wind turbine blade, the nacelle or a part of any of the foregoing.

In an embodiment, the acidic aqueous liquid has a pH value of less than 7, in particular of less than 6, in particular of less than 5, in particular of less than 4. Moreover, the acidic aqueous liquid may have a pH value of more than 0, in particular of more than 1.

In an embodiment, the acid is preferably an organic acid or a carboxylic acid, rather than a mineral acid. An organic acid or a carboxylic acid may not only be particularly suitable for adjusting an appropriate pH, but may additionally also act as a solvent for a reaction product of the resin after reaction with the acid. Moreover, it may be advantageous if the organic acid or carboxylic acid has a good miscibility with water or a water/solvent-mixture and may also dissolve non-polar substances.

In an embodiment, the acid comprises a monocarboxylic acid, a dicarboxylic acid, a tricarboxylic acid and/or a polycarboxylic acid, in particular selected from the group consisting of aliphatic monocarboxylic acids, aliphatic dicarboxylic acids, aliphatic tricarboxylic acids and aliphatic polycarboxylic acids. For instance, the acid may be selected from the group consisting of acetic acid, lactic acid, maleic acid, fumaric acid, tartaric acid, oxalic acid, malonic acid, succinic acid, adipic acid and citric acid. Combinations of two or more of these acids are suitable as well.

In an embodiment, the acid comprises at least one selected from the group consisting of acetic acid, lactic acid, citric acid, oxalic acid, tartaric acid or combinations of two or more of foregoing. In particular, the acid may comprise acetic acid (for instance in a concentration of 25% by mass of the acidic aqueous liquid), which has proven particularly suitable for the purposes of the present invention.

The acid, such as acetic acid, may already react with the resin at room temperature. Thus, no additional heating step may be required. In order to increase the reaction speed, it may however be advantageous to apply heat, e.g. by preheating the acidic aqueous liquid and/or the portion of a surface of the wind turbine blade, the nacelle or a part of any of the foregoing and/or by heating after the acidic aqueous liquid has been applied to the portion of a surface of the wind turbine blade, the nacelle or a part of any of the foregoing.

While the present invention has been described in detail by way of specific embodiments and examples, it should be appreciated the invention is not limited thereto and various alterations and modifications are possible, without departing from the scope of the invention.

## Claims

1. A resin composition comprising:
an epoxy component;
a sterically hindered amine component;
a polyfunctional (meth)acrylate component.

2. The resin composition as set forth in claim 1, wherein the epoxy component is selected from the group consisting of glycidyl ethers, glycidyl esters, glycidyl amines, divinylbenzene dioxide, cycloaliphatic epoxides, and combinations thereof.

3. The resin composition as set forth in any one of the preceding claims, wherein the sterically hindered amine component comprises at least one functional group selected from H₂N-C(CH₃)₂-, H₂N-C(CH(CH₃)₂)₂-, H₂N-C(C(CH₃)₃)₂- and an amino group bound to a cyclic carbon atom.

4. The resin composition as set forth in any one of the preceding claims, wherein the sterically hindered amine component comprises at least one H₂N-C(CH₃)₂- functional group, in particular one, two or three H₂N-C(CH₃)₂- functional groups.

5. The resin composition as set forth in any one of the preceding claims, wherein the sterically hindered amine component is selected from the group consisting of aliphatic polyamines, arylaliphatic polyamines, cycloaliphatic polyamines, alkanolamines, polyetherpolyamines, and combinations thereof, wherein each component comprises at least one sterically hindered amine functional group.

6. The resin composition as set forth in any one of the preceding claims, wherein the polyfunctional (meth)acrylate component comprises two, three, four or more (meth)acrylate functional groups.

7. The resin composition as set forth in any one of the preceding claims, wherein the polyfunctional (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol A diglycidlyether, trimethylolpropane triacrylate, pentaerythritol tetraacrylate, tricyclo[5.2.1.0(2,6)]decanedimethanol diacrylate and combinations thereof.

8. The resin composition as set forth in any one of the preceding claims, wherein the epoxy component comprises Bisphenol A diglycidyl ether and/or the sterically hindered amine component comprises 1,8-diamino-p-menthane and/or the polyfunctional (meth)acrylate component comprises trimethylolpropane triacrylate or pentaerythritol tetraacrylate.

9. The resin composition as set forth in any one of the preceding claims, wherein a molar ratio of the polyfunctional (meth)acrylate component is in a range of from 10 to 50 mol% and a molar ratio of the epoxy component is in a range of from 50 to 90 mol%, each per 100 mol% of the sterically hindered amine component.

10. The resin composition as set forth in any one of the preceding claims, wherein the resin composition further comprises an amine hardener, in particular in an amount of from 1 to 20 parts by weight per 100 parts by weight of the sterically hindered amine component.

11. A method of producing a wind turbine blade, a nacelle or a part of any of the foregoing, the method comprising:
applying a resin composition according to any of the preceding claims into a mold by a vacuum infusion method, in particular vacuum assisted resin transfer molding,
curing the resin composition.

12. The method as set forth in claim 11, wherein the step of curing the resin composition comprises heating the resin composition to a temperature in the range of from 60 to 150 °C, in particular 70 to 120 °C.

13. The method as set forth in any one of claims 11 to 12, wherein the method further comprises, after curing the resin composition, removing the mold.

14. A wind turbine blade, a nacelle or a part of any of the foregoing obtainable by a method according to any one of claims 11 to 13.

15. A method of recycling a wind turbine blade, a nacelle or a part of any of the foregoing according to claim 14, wherein the method comprises:
bringing an acidic aqueous liquid comprising an acid in contact with a portion of a surface of the wind turbine blade, the nacelle or a part of any of the foregoing.
